# EUROPEAN PATENT APPLICATION

(11) **EP 3 627 287 A1**
(43) Date of publication of application: **25.03.2020**
(21) Application number: 18210819.1
(22) Date of filing: 06.12.2018
(51) Int. Cl.: G06F 3/01

(54) **TRACKING METHOD AND TRACKING SYSTEM USING THE SAME**

(30) Priority: 20.09.2018 US 201816137477
(71) Applicant: XRSpace CO., LTD., Taoyuan City 330 (TW)
(72) Inventor: Chou, Peter, 100 Taipei City (TW); Hsieh, Yi-Kang, 310 Hsinchu County (TW); Lin, Chun-Wei, 330 Taoyuan City (TW); Wu, Chia-Wei, 231 New Taipei City (TW)
(74) Representative: Straus, Alexander

(57) **Abstract**

A tracking method (20) of tracking an ankle of a user (U1) comprises obtaining a first ankle information (U1_a) and a head information (U1_h) of the user (U1) (202); determining a second ankle information (U1_a2) according to the first ankle information (U1_a) (204); and calibrating the second ankle information (U1_a2) according to the first ankle information (U1_a) and the head information (U1_h) (206); wherein the first ankle information (U1_a) is a 3Dof (degrees of freedom) information; the second ankle information (U1_a2) is a 6Dof information; the head information (U1_h) is the 6DoF information.

## Description

### Field of the Invention

The present disclosure relates to a tracking method and a tracking system using the same, and more particularly, to a tracking method and a tracking system capable of obtaining a 6Dof ankle information according to a 6Dof head information and a 3Dof ankle information.

### Background of the Invention

With the population of the virtual reality (VR), augmented reality (AR), mixed reality (MR) and extended reality (XR) devices and the interactive system, users may easily experience the VR/AR/MR/XR environment provided by the interactive system with the aids of VR/AR/MR/XR devices, such that the users may completely emerge themselves into the VR/AR/MR/XR environment. In order to improve the user experience, a tracking system is usually employed for capturing motions of the user to generate corresponding response in the VR/AR/MR/XR environment. Therefore, the user may operate the interactive system with a variety of hand gestures or body movements, for enhancing the user experience.

In the prior art, sensor fusion is widely adopted for tracking the ankle position of the user. In detail, the tracking system uses at least two sensors to track the ankle position of the user, where one sensor is worn on one knee of the user and another one is worn on the ankle. Each sensor is capable of providing information of 3 degrees of freedom (Dof) of the knee and the ankle, such that the tracking system may obtain sufficient information of the leg to determine the leg movements. However, motion tracking with sensor fusion may increase hardware requirement of the tracking system and increase cost of the tracking system. In another aspect, motion tracking without sensor fusion is not capable of obtaining enough information of the ankle to correctly determine leg movements. Therefore, there is necessity to improve over the prior art.

### Summary of the Invention

Therefore, the present disclosure provides a tracking method and a tracking system capable of tracking positions of the ankle according to a 3Dof ankle information and a 6Dof head information.

This is achieved by a tracking method according to the independent claim 1 or by a tracking system according to the independent claim 6 here below. The dependent claims pertain to corresponding further developments and improvements.

As will be seen more clearly from the detailed description following below, the claimed tracking method of tracking an ankle of a user comprises obtaining a first ankle information and a head information of the user; determining a second ankle information according to the first ankle information; and calibrating the second ankle information according to the first ankle information and the head information; wherein the first ankle information is a 3Dof (degrees of freedom) information; the second ankle information is a 6Dof information; the head information is the 6DoF information

In another aspect, the claimed tracking system, for tracking an ankle of a user, comprises a first sensor, for obtaining a head information of the user; a second sensor, for obtaining a first ankle information of the user; a processing unit; and a storage unit, for storing a program code to instruct the processing unit to perform the following steps determining a second ankle information according to the first ankle information; and calibrating the second ankle information according to the first ankle information and the head information; wherein the first ankle information is a 3Dof (degrees of freedom) information; the second ankle information is a 6Dof information; the head information is the 6DoF information.

### Brief Description of the Drawings

Fig. 1 is a schematic diagram of a tracking system according to an embodiment of the present disclosure.
Fig. 2 is a schematic diagram of a process according to an embodiment of the present disclosure.
Fig. 3 is a schematic diagram of another process according to an embodiment of the present disclosure.

### Detailed Description

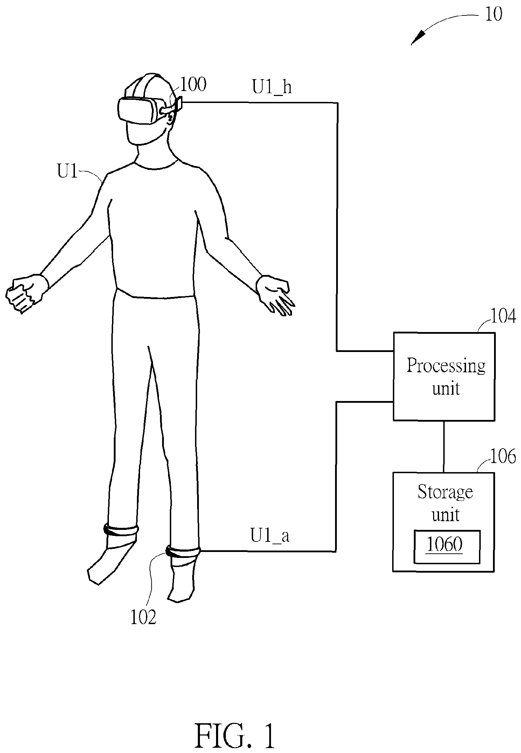

Please refer to Fig. 1, which is a schematic diagram of a tracking system 10 according to an embodiment of the present disclosure. The tracking system 10 is utilized for tracking motions of an ankle of a user U1 so as to generate an ankle information U1_a2 of 6Dof (degrees of freedom) to an interactive system. The interactive system is, for example, a virtual reality (VR), an augmented reality (AR), mixed reality (MR) or extended reality (XR) system which provides a simulated VR/AR/MR/XR environment for the user U1 to indulge in. If the tracking system 10 can precisely read movements of the user U1 with less hardware requirements, the interactive system may generate adequate and/or realistic responses to the user U1, so as to improve user experience. Therefore, the tracking system 10 is utilized for precisely tracking the motions of the ankle of the user U1 and accordingly generating the ankle information U1_a2 of 6Dof of the user U1 to the interactive system with less hardware requirements, so as to generate proper response and improve user experience.

As shown in Fig. 1, the tracking system 10 is configured to obtain the ankle position of the user U1, and comprises a head sensor 100, an ankle sensor 102, a processing unit 104 and a storage unit 106. The head sensor 100 is worn by the user U1 on the head, and configured to obtain a head information U1_h. The ankle sensor 102 is worn by the user U1 on one or two ankles, and configured to obtain an ankle information U1_a. Notably, the head sensor is a 6Dof sensor for obtaining the head information U1_h of 6Dof, and the ankle sensor is a 3Dof sensor for obtaining the ankle information U1_a of 3Dof. The processing unit 104 may obtain the ankle information U1_a and the head information U1_h, for determining and calibrating the ankle information U1_a2 of 6Dof. A program code 1060, stored in the storage unit 106, instructs the processing unit 104 to execute steps of a process. In other words, the tracking system 10 is capable of determining and calibrating the accurate ankle information U1_a2 of 6Dof according to the head information U1_h of 6Dof and the ankle information U1_a of 3Dof, which may efficiently decrease the amount of sensors disposed on the user U1.

Moreover, the head sensor 100 is utilized to be worn by the user U1, mounted on the surface of the head, for obtaining the head information U1_h of 6Dof. The head sensor 100 may be an inertial measurement unit (IMU), an accelerometer, a gyroscope, a magnetic sensor or a combination of a part or all of the above. The ankle sensor 102 is worn by the user U1 and mounted on the surface of the ankle for obtaining the ankle information U1_a. The ankle sensor 102 may be the IMU, the accelerometer or the gyroscope. As long as the head sensor 100 and the ankle sensor 102 may respectively obtain the 6Dof kinetic information of the head and the 3Dof kinetic information of the ankle, the head sensor 100 and the ankle sensor 102 may be implemented by other kinds of sensors. In addition, the processing unit 104 may be a microprocessor or an application-specific integrated circuit (ASIC). The storage unit 106 may be read-only memory (ROM), random-access memory (RAM), non-volatile memory (e.g., an electrically erasable programmable read only memory (EEPROM) or a flash memory), CD-ROMs, magnetic tapes, floppy disks, optical data storage devices, etc., and not limited thereto.

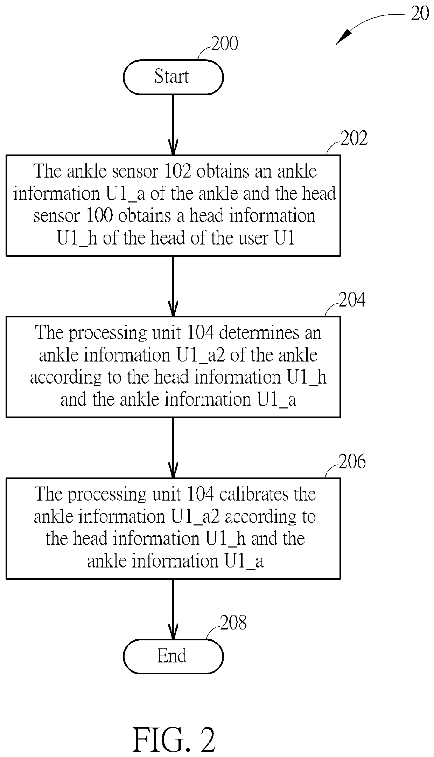

In an embodiment, the operations of the tracking system 10 may be summarized as a process 20, as shown in Fig. 2, the process 20 comprises the following steps:
Step 200: Start.
Step 202: The ankle sensor 102 obtains an ankle information U1_a of the ankle and the head sensor 100 obtains a head information U1_h of the head of the user U1.
Step 204: The processing unit 104 determines an ankle information U1_a2 of the ankle according to the head information U1_h and the ankle information U1_a.
Step 206: The processing unit 104 calibrates the ankle information U1_a2 according to the head information U1_h and the ankle information U1_a.
Step 208: End.

According to the process 20, in Step 202, the head sensor 100 and the ankle sensor 102 may respectively obtain the head information U1_h of 6Dof and the ankle information U1_a of 3Dofof the user U1. The ankle sensor 102 may be worn by the user U1 on one or two ankles, and thus, the ankle information U1_a may include 3Dof information of one or two angles of the user U1. In Step 204, the processing unit 104 may track the ankle position according to the head information U1_h and the ankle information U1_a. More specifically, the ankle information U1_a of 3Dof comprises a triaxial acceleration information of the ankle, such that the processing unit 104 is capable of determining a triaxial displacement information of the ankle through double integration to the ankle information U1_a. Therefore, the second ankle information U1_a2 of 6DoF may be obtained through merging the triaxial displacement information with the ankle information U1_a by the processing unit 104. The ankle information U1_a2 may include 6Dof information of one or two angles of the user U1. However, the triaxial acceleration information of the ankle obtained possesses errors, which is repeatedly accumulated every time while the user U1 is taking a step. Thus, the ankle information U1_a2 becomes more inaccurate and deviated through more steps the user U1 takes. As a result, the ankle information U1_a2, comprising the triaxial displacement information obtained through double integration to the ankle information U1_a, is incorrect and may not be directly utilized for indicating the correct ankle position of the user U1. Therefore, in Step 206, the processing unit 104 calibrates the ankle information U1_a2 according to the head information U1_h and the ankle information U1_a to remove errors out of the ankle information U1_a2, so as to ensure that the generated ankle information U1_a2 may indicate the correct ankle position of the user U1, further improving user experience of the tracking system 10.

Particularly, the processing unit 104 may determine an ankle coordinate for indicating the ankle position corresponding to the body of the user U1 according to the head information U1_h and the ankle information U1_a, such that the ankle coordinate may not only indicate the displacement information of the ankle but an absolute position corresponding to the user U1. For example, when the ankle information U1_a2 indicates that the ankle is rising, the tracking system 10 may not properly tell whether the user U1 is taking stairs or just raising his feet. Therefore, the tracking system 10 further utilizes the head information U1_h to determine the ankle coordinate to correctly indicate where the ankle position is corresponding to the body of the user U1. Therefore, the processing unit 104 may utilize the ankle coordinate for calibration, so as to remove errors out of the ankle information U1_a2.

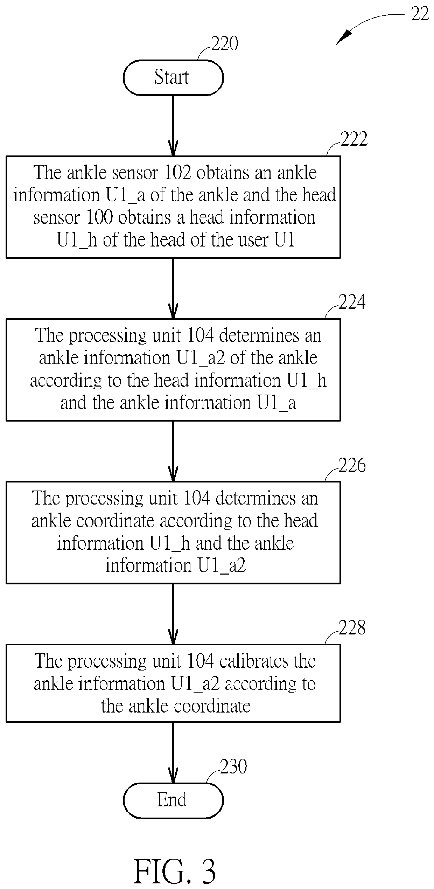

In another embodiment, the detailed operations of the tracking system 10 mentioned above may be summarized as another process 22, as shown in Fig. 3, the process 22 comprises the following steps:
Step 220: Start.
Step 222: The ankle sensor 102 obtains an ankle information U1_a of the ankle and the head sensor 100 obtains a head information U1_h of the head of the user U1.
Step 224: The processing unit 104 determines an ankle information U1_a2 of the ankle according to the head information U1_h and the ankle information U1_a.
Step 226: The processing unit 104 determines an ankle coordinate according to the head information U1_h and the ankle information U1_a2.
Step 228: The processing unit 104 calibrates the ankle information U1_a2 according to the ankle coordinate.
Step 230: End.

Steps 220-224 are similar to Steps 200-204, which are not narrated herein.

In detail, the displacement information of the ankle information U1_a2 may only indicate movement of the ankle but not indicate the correct ankle position corresponding to the body of the user U1. Therefore, in Step 226, the processing unit 104 may take the head information U1_h as an origin or a reference point of the user U1 to determine the ankle coordinate corresponding to the body of the user U1. Under such a circumstance, the same amount of displacement information measured by the head sensor 100 and the ankle sensor 102 may be accordingly canceled to preserve the displacement information of the ankle corresponding to the body of the user U1, and thus, to correctly indicate the ankle position of the user U1.

Before the processing unit 104 performs calibration to the ankle information U1_a2, the tracking system may have to determine a reset position of the user U1 for calibrating the ankle coordinate, wherein the reset position may be the ankle coordinate when user is under some certain postures. For example, the reset position range may be the lowest coordinate of the ankle where the user U1 is standing firmly on the ground, or the reset position may be the highest coordinate of the ankle where the user U1 is raising his/her knee to step forward. Moreover, the reset position may be obtained by the processing unit 104 through the head sensor 100 and the ankle sensor 102 in Step 222, or the reset position may be obtained by the processing unit 104 in the background while the tracking system is performing the process 22, which is also within the scope of the present disclosure.

After the ankle coordinate and the reset position are determined by the processing unit 104, the tracking system 10 may calibrate the ankle information U1_a2 in Step 228. More specifically, the processing unit 104 calculates an absolute difference between the reset position and the ankle coordinate for calibrating the ankle information U1_a2, wherein the absolute difference may indicate whether the ankle is returned to the reset position or not. When the absolute difference is smaller than a preset distance, the processing unit 104 sets the ankle coordinate equal to the reset position, for removing errors of the ankle sensor 102. In the same way, the ankle information U1_a2 may be accordingly reset to remove same amount of errors according to the ankle coordinate and the head information U1_h. In another aspect, when the absolute difference is greater than or equal to the preset distance, the processing unit 104 determines that the ankle is not returned to the reset position, and determines not to perform calibration of the ankle coordinate. In brief, according to the process 22, the tracking system 10 determines the reset position and the ankle coordinate, for resetting the ankle coordinate every time when the ankle is returned to the reset position, so as to remove errors generated by the ankle sensor 102 out of the ankle information U1_a2.

According to the processes 20 and 22, the tracking system 10 may determine and calibrate the ankle information U1_a2 of 6Dof according to the head information U1_h of 6Dof and the ankle information of 3Dof. The processing unit 104 removes errors every time when the ankle is returned to the reset position. As such, errors generated by the ankle sensor 102 are not accumulated, and the tracking system 10 is capable of generating the correct ankle information U1_a2 of 6DoF. In other words, the tracking system 10 is capable of performing real-time motion tracking of the ankle through the head sensor 100 and the ankle sensor 102, further decreasing hardware requirements of the tracking system 10 and improving user experience.

In another aspect, the processing unit 104 may further determine a knee coordinate according to the track of the ankle information U1_a2, for determining a leg movement of the user U1 by the processing unit 104. In detail, after the ankle coordinate is determined by the processing unit 104, the processing unit 104 may analyze the track of the ankle coordinate for determining a knee coordinate of the user U1. In other words, although the tracking system 10 may not directly sense an ankle coordinate of the user U1, the processing unit 104 is capable of recovering the knee coordinate through the complete and correct track of the ankle coordinate, such that the processing unit 104 may determine the leg movement of the user U1 according to the knee coordinate and the ankle coordinate. Therefore, the tracking system 10 is capable of calibrating the ankle information U1_a2 according to the ankle information U1_a2 and the knee coordinate. In detail, after the processing unit 104 obtains the knee coordinate, the leg movement of the user U1 is accordingly determined. When the absolute difference between the ankle coordinate and the reset position is within the preset distance, the processing unit 104 further analyzes whether the leg movement of the user U1 complies with a preset movement for calibrating the ankle information U1_a2. For example, the storage unit 106 may store the preset movement of walking, running or taking stars, such that the processing unit 104 may compare the leg movement with the preset movement to determine whether the user is performing the preset movement. If the leg movement does not comply with the preset movement, the processing unit 104 determines not to perform calibration to the ankle coordinate and the ankle information U1_a2. Only when the leg movement complies with the preset movement and the absolute difference between the ankle coordinate and the reset position is within the preset distance, the processing unit 104 performs calibration to the ankle coordinate and the ankle information U1_a2. Therefore, with additional information of the knee position and the leg movement, the processing unit 104 may exclude abnormal scenarios of the user U1, to perform calibration to the ankle coordinate and the ankle information U1_a2 more accurately.

In addition, the tracking system 10 may further utilize the head sensor 100 for obtaining a height information of the user U1. Under such a circumstance, the processing unit 104 may determine a distance between the head and the ankle of the user U1, such that a coordinate system comprising a head coordinate and the ankle coordinate may be accordingly determined. With the head coordinate, the processing unit 104 may better determine the knee coordinate of the user U1 and the preset distance according to proportions corresponding to the height information. Therefore, with the height information of the user U1, the processing unit 104 may determine the preset movement, the preset distance and the knee coordinate according to the height information of the user U1 more accurately, for better fitting proportions of the user U1, further improving performance of the tracking system 10.

The conventional tracking system requires multiple sensors worn by the user on the knee and the ankle, for determining the leg movement of the user, which increases hardware requirements of the tracking system. In another aspect, the conventional tracking system with only one sensor worn by the user on the ankle or with two sensors worn by the user on the two ankles may not obtain enough information to determine the ankle position and the leg movement, which results in inaccurate motion tracking of the tracking system and further degrades user experience. In comparison, the tracking system of the present disclosure is able to determine an ankle coordinate according to the head information of 6Dof and the ankle information of 3Dof. In other words, the user wears one sensor on the ankle or two sensors on the two angles, while the tracking system of the present disclosure can still accurately generate the ankle information of 6Dof. In addition, the tracking system further calibrates the ankle information every time when the ankle is returned to the reset position, for removing errors out of the ankle information. Therefore, the tracking system of the present disclosure may determine correct ankle information of 6Dof through calibration, decreasing hardware requirements of the tracking system and improving user experience.

## Claims

1. A tracking method (20, 22) of tracking an ankle of a user (U1), **characterized by** comprising:
obtaining a first ankle information (U1_a) and a head information (U1_h) of the user (U1) (202, 222);
determining a second ankle information (U1_a2) according to the first ankle information (U1_a) (204, 224); and
calibrating the second ankle information (U1_a2) according to the first ankle information (U1_a) and the head information (U1_h) (206);
wherein the first ankle information (U1_a) is a 3Dof (degrees of freedom) information; the second ankle information (U1_a2) is a 6Dof information; the head information (U1_h) is the 6Dof information.

2. The tracking method (20) of claim 1, **characterized in that** determining the second ankle information (U1_a2) according to the first ankle information (U1_a) (204, 224) is performing an integration operation to the first ankle information (U1_a) to obtain the second ankle information (U1_a2).

3. The tracking method (20) of claim 1, **characterized in that** calibrating the second ankle information (U1_a2) according to the first ankle information (U1_a) and the head information (U1_h) (206) further comprises:
determining a reset position of the ankle according to the first ankle information (U1_a) and the head information (U1_a2).

4. The tracking method (20) of claim 3, **characterized in that** the step of calibrating the second ankle information (U1_a2) according to the first ankle information (U1_a) and the head information (U1_h) comprises:
when an absolute difference between the second ankle information (U1_a2) and the reset position of the ankle is smaller than a preset distance, setting the second ankle information (U1_a2) equal to the reset position of the ankle.

5. The tracking method (20) of claim 1, **characterized in that** the step of calibrating the second ankle information (U1_a2) according to the first ankle information (U1_a) and the head information (U1_h) (206) further comprises the following sub-steps:
determining a leg movement of the user (U1) according to the second ankle information (U1_a2); and
when the determined leg movement consists with a preset movement, performing calibration to the second ankle information (U1_a2) according to the first ankle information (U1_a) and the head information (U1_h).

6. A tracking system (10), for tracking an ankle of a user (U1), **characterized by** comprising:
a first senor (100), for obtaining a head information (U1_h) of the user (U1) (202, 222);
a second senor (102), for obtaining a first ankle information (U1_a) of the user (U1);
a processing unit (104); and
a storage unit (106), for storing a program code (1060) to instruct the processing unit (104) to perform the following steps:
determining a second ankle information (U1_a2) according to the first ankle information (U1_a) (204, 224); and
calibrating the second ankle information (U1_a2) according to the first ankle information (U1_a) and the head information (U1_h) (206);
wherein the first ankle information (U1_a) is a 3Dof (degrees of freedom) information; the second ankle information (U1_a2) is a 6Dof information; the head information (U1_h) is the 6Dof information.

7. The tracking system (10) of claim 6, **characterized in that** the processing unit (104) performs an integration operation to the first ankle information (U1_a) to obtain the second ankle information (U1_a2), for determining the second ankle information (U1_a2) according to the first ankle information (U1_a) (204, 224).

8. The tracking system (10) of claim 6, **characterized in that** the processing unit (104) is configured to perform the following step, for calibrating the second ankle information (U1_a2) according to the first ankle information (U1_a) and the head information (U1_h) (206):
determining a reset position of the ankle according to the first ankle information (U1_a) and the head information (U1_h).

9. The tracking system (10) of claim 8, **characterized in that** the processing unit (104) is configured to perform the following steps, for calibrating the second ankle information (U1_a2) according to the first ankle information (U1_a) and the head information (U1_h) (206):
when an absolute difference between the second ankle information (U1_a2) and the reset position of the ankle is smaller than a preset distance, setting the second ankle information (U1_a2) equal to the reset position of the ankle.

10. The tracking system (10) of claim 6, **characterized in that** the processing unit (104) is further configured to perform the following sub-steps, for calibrating the second ankle information (U1_a2) according to the first ankle information (U1_a) and the head information (U1_h) (206):
determining a leg movement of the user (U1) according to the second ankle information (U1_a2); and
when the determined leg movement consists with a preset movement, performing calibration to the second ankle information (U1_a2) according to the first ankle information (U1_a) and the head information (U1_h).
